# EUROPÄISCHE PATENTSCHRIFT

(11) **EP 1 940 657 B1**
(45) Veröffentlichungstag und Bekanntmachung des Hinweises auf die Patenterteilung: **24.11.2010**
(21) Anmeldenummer: 06806338.7
(22) Anmeldetag: 17.10.2006
(51) Int. Cl.: B60R 21/231, B60R 21/207, B60R 21/16

(54) **FAHRZEUGSITZ MIT AM RAHMEN DES SITZES ANGEBRACHTEN LATERALEM THORAX UND PELVIS AIRBAG**
VEHICLE SEAT WITH A LATERAL THORAX AND PELVIS AIRBAG FITTED TO THE FRAME OF THE SEAT
SIEGE DE VEHICULE AUTOMOBILE DOTE D'AIRBAGS LATERAUX POUR LE THORAX ET LE BASSIN DISPOSES SUR L'ENCADREMENT DU SIEGE

(30) Priorität: 24.10.2005 DE 102005051171
(43) Veröffentlichungstag der Anmeldung: 09.07.2008
(73) Patentinhaber: AUTOLIV DEVELOPMENT AB, 447 83 Vargarda (SE)
(72) Erfinder: WALLENTIN, Rainer, 85411 Hohenkammer (DE)
(74) Vertreter: Stornebel, Kai
(86) Internationale Anmeldenummer: PCT/EP2006/010008
(87) Internationale Veröffentlichungsnummer: WO 2007/048527

(56) Entgegenhaltungen:
- EP-A1- 0 940 298
- EP-A1- 1 459 942
- WO-A-98/56623
- DE-U1- 20 306 153
- JP-A- 5 310 095
- JP-A- 6 278 513
- JP-A- 9 202 204
- JP-A- 57 058 533
- JP-A- 2004 210 049
- US-A- 5 651 582
- US-B1- 6 279 944

## Beschreibung

Die Erfindung betrifft einen Fahrzeugsitz mit einer Sitzfläche und einer Sitzlehne, die einen von einem Polster abgedeckten Sitzrahmen aufweist, an dem eine Airbageinheit mit einem gefalteten oder gerollten Gassack und einem Gasgenerator befestigt ist, der in strömungstechnischer Verbindung mit dem Gassack steht, Ein solcher Fahrzeugsitz ist insbesondere bei einem Seitenaufprall vorteilhaft, wenn sich der Gassack zwischen den Sitznutzer und eine Fahrzeugseitenstruktur entfaltet.

Die US 5,651,582 beschreibt einen Fahrzeugsitz mit einem Sitzkissen und einer Sitzlehne, die einen Rahmen aufweist. An dem Sitzrahmen ist an einer Seitenstrebe eine Ausformung zur Aufnahme des Gasgenerators ausgebildet. Der Gasgenerator ist über einen Bolzen an der Ausformung festgelegt. Auf der dem Rahmen abgewandten Seite wird der Gasgenerator zusammen mit dem zusammengelegten Gassack von einer Abdeckung umgeben, die an einem weiteren Befestigungspunkt an den Sitzrahmen festgelegt ist. Eine Sollrissnaht ermöglicht ein leichtes Hindurchtreten des sich entfaltenden Gassackes nach vorne.

Die EP 940 298 A1 beschreibt eine Airbag-Vorrichtung in einem Fahrzeugsitz. Der Airbag ist an dem Sitzrahmen innerhalb eines Gehäuses angeordnet und über Bolzen festgelegt. Nach dem Zünden des Gasgenerators entfaltet sich der Airbag nach vorne.

Die US 6,279,944 B1 beschreibt einen in einer Umhüllung befindlichen Gasgenerator, der an einem Sitzrahmen festgelegt ist. Der Airbag entfaltet sich nach vorne und nach oben neben den Sitznutzer.

Die JP 2004210049 betrifft einen Airbag, der unterhalb eines Sitzpolsters angeordnet ist und ein nach vorne Rutschen eines Fahrzeuginsassens während eines Frontalaufpralles verhindern soll. Der Airbag ist flach auf einer Unterlage unterhalb des Polsters aufgelegt.

Die EP 1 459 942 A1 beschreibt ein Insassenschutzsystem, bei dem ein Airbag unterhalb eines Sitzpolsters im Kniebereich angeordnet ist. Sobald über Sensoren eine zu starke Verzögerung gemessen wird, entfaltet sich der Airbag und verhindert ein nach vorne Rutschen des Fahrzeuginsassen.

Die JP 09202204 beschreibt eine Airbag-Verpackungseinheit und eine Entfaltungsmethode für einen Airbag, bei dem der Gasgenerator zusammen mit dem gefalteten Airbag in einer weichen Umhüllung angeordnet ist. Dieses System aus Gasgenerator und gefaltetem Airbag zusammen mit der Umhüllung kann auch an einer Sitzlehne angeordnet sein. Die Festlegung erfolgt über Schraubbolzen des Gasgenerators.

Die JP 06278513 betrifft eine Vorrichtung zum Schutz bei einem Heckaufprall, bei dem ein Airbag-Modul an der Rückseite eines Sitzes angeordnet ist. Eine Hülle umgibt das Airbag-Modul.

Die JP 57058533 beschreibt eine Vorrichtung, bei der ein Rad eine Kurbel antreibt, die einen Kolben in eine hin- und hergehende Bewegung versetzt. Dieser Kolben bläst einen in der Rücklehne eines Sitzes befindlichen Airbag auf. Diese Konstruktion kann zusammen mit einem Sitzgurt eingesetzt werden.

Die JP 05310095 beschreibt ein Airbag-Modul, das an der Rückenlehne in rückwärtiger Richtung befestigt ist. Zugseile sind an den Enden des Airbags angeordnet und über Umlenkrollen an dem Vordersitz befestigt, um die Ausdehnungstiefe des Airbags einstellen zu können.

Die WO 98/56623 beschreibt ein Verfahren zum Falten eines Airbags sowie eine Anordnung eines solcher Art gefalteten Airbags an einem Seitenrahmen einer Sitzlehne. Die Befestigung erfolgt über drei Schraubbolzen, die an dem Gasgenerator ausgebildet sind.

Die DE 203 06 153 U1 beschreibt einen Fahrzeugsitz mit integriertem Airbag mit einer Sitzfläche und einer Rückenlehne, wobei die Rückenlehne einen mit einer Polsterung abgedeckten Rahmen umfasst. Eine Airbageinheit, die einen aufblasbaren und mit einer Aufblasvorrichtung strömungsmäßig verbundenen Gassack enthält, um den Gassack bei einer Aktivierung der Airbageinheit aufzublasen, ist an dem Rahmen der Rücklehne dergestalt angebracht, dass sie durch die Polsterung abgedeckt ist. Die Polsterung der Rücklehne weist eine Sollbruchlinie auf, die in Bezug auf die Airbageinheit derart angeordnet ist, dass die Polsterung bei einer Aktivierung der Airbageinheit längs zur Bruchlinie getrennt wird, so dass ein Teil der Polsterung durch den sich aufblähenden Gassack abgelenkt wird.

Der Airbag ist dabei lediglich über den Gasgenerator an dem Sitzrahmen befestigt. Die Befestigung erfolgt über die Befestigungsbolzen des Gasgenerators, mit denen auch dieser an dem Sitzrahmen festgelegt ist. Eine solche Befestigung hat den Nachteil, dass der entfaltete Airbag schlecht fixiert ist und sich somit in Richtungen entfalten kann, in denen eine suboptimale Schutzwirkung für den Sitznutzer bereitgestellt wird.

Aufgabe der vorliegenden Erfindung ist es, einen verbesserten Fahrzeugsitz bereitzustellen, der eine verbesserte Führung des Airbags während des Aufblasens und im aufgeblasenen Zustand gewährleistet.

Erfindungsgemäß wird diese Aufgabe durch einen Fahrzeugsitz mit den Merkmalen des Anspruchs 1 gelöst. Vorteilhafte Ausgestaltungen und Weiterbildungen der Erfindung sind in den Unteransprüchen beschrieben.

Der erfindungsgemäße Fahrzeugsitz mit einer Sitzfläche und einer Sitzlehne, die einen von einem Polster abgedeckten Sitzrahmen aufweist, an dem eine Airbageinheit mit einem einen Gaseinlass aufweisenden gefalteten oder gerollten Gassack und ein Gasgenerator an einer ersten Befestigungsstelle befestigt ist, der in strömungstechnischer Verbindung mit dem Gassack steht, sieht vor, dass der Gassack außen an der dem Sitznutzer abgewandten Seite des Sitzrahmens an einer zweiten Befestigungsstelle fixiert ist, also neben der Befestigung über den Gasgenerator hinaus eine weitere Befestigungsstelle aufweist, so dass der Airbag nicht frei und unkontrolliert im aufgeblasenen Zustand umherschwenken kann, wobei der Gasgenerator an der Rückseite oder der Innseite des Sitzrahmens angeordnet und zwischen dem Gaseinlass und dem gefalteten oder gerollten Gassack ein Gasführungsabschnitt ausgebildet ist, in dem Befestigungslöcher der zweiten Befestigungsstelle vorgesehen sind.

Eine Weiterbildung der Erfindung sieht vor, dass der Gassack einen Gaseinlass im Bereich des Gasgenerators aufweist und über Befestigungsbolzen des Gasgenerators dort an dem Sitzrahmen festgelegt ist. Zwischen dem Gaseinlass und dem gefalteten oder gerollten Gassack kann ein Gasführungsabschnitt ausgebildet sein, der auf der Außenseite des Sitzrahmens formschlüssig fixiert ist. Dadurch ist es möglich, dass der Gasgenerator an einem entfernten Ort an dem Sitzrahmen gelagert sein kann, ohne dass eine mangelhafte Fixierung des Gassackes oder eine unkontrollierte Entfaltung bei dem Aufblasen des Gassackes auftreten. Durch die Ausbildung des Gassackabschnittes ist es möglich, den Gasgenerator auf der Innenseite des Sitzrahmens unter Ausnutzung einer Profilgestaltung platzsparend anzuordnen, ohne dass der Sitzkomfort darunter leidet. Der Airbag kann im gefalteten oder gerollten Zustand dann an einem Ort an dem Sitzrahmen angeordnet sein, der für seine Schutzwirkung optimal ist, ohne dass Einbußen an der Fixierung des Gassackes auftreten. Auf diese Weise kann der im allgemeinen geringe Bauraum zwischen der Seitenwand des Sitzes und des Sitzrahmens auf ein Minimum reduziert werden.

Der eingerollte oder gefaltete Gassack kann in einem Gehäuse, insbesondere in einer weich verformbaren Umhüllung, einem sogenannten Soft-Cover, angeordnet sein, so dass der Gassack vor äußeren Einflüssen, die durch das Polster auf den Gassack übertragen werden können, weitestgehend geschützt ist. Ebenfalls kann eine einfache Montage durch eine Fixierung der Umhüllung, beispielsweise über Clipsverbindungen, Klettverschlüsse oder dergleichen an dem Sitzrahmen erfolgen, so dass die Umhüllung mitsamt dem Gassack als Teil des Polsters ausgebildet sein kann. Die Fixierung des Gassackes an dem Sitzrahmen erfolgt unmittelbar und nicht durch die Umhüllung. Bevorzugt erfolgt die Fixierung an dem Sitzrahmen an dem Gasführungsabschnitt, der nicht in dem Gehäuse untergebracht ist. Jedoch ist es auch möglich, eine Umhüllung des ganzen Gassackes vorzusehen. Dazu sind an dem Übergang vom Gasführungsabschnitt zum eingrollten oder gefalteten Gassack Befestigungslöcher ausgebildet, durch die der Gassack an dem Sitzrahmen, beispielsweise durch Clipse, Schrauben oder Nieten formschlüssig fixiert ist. Gegebenenfalls kann eine Fixierung des Gasführungsabschnittes auch über einen Klettverschluss formschlüssig erfolgen.

Der Gasgenerator kann an der Rückseite oder der Innenseite des Sitzrahmens angeordnet sein. Eine Auswahl des Anbringungsortes des Gasgenerators erfolgt unter den Gesichtspunkten einer optimierten Montage und einer minimalen Komfortbeeinträchtigung für den Sitznutzer.

Eine vorteilhafte Weiterbildung der Erfindung sieht vor, dass der Gassack als ein Mehrkammergassack ausgebildet ist, insbesondere als ein Thorax-Pelvis-Gassack, so dass diese Körperregionen bei einem Seitenaufprall besonders geschützt sind Zur Ausbildung eines Mehrkammergassackes ist es vorgesehen, dass an diesem eine Trennnaht oder eine separate Stoffbahn vorgesehen ist, die den Gassack in mehrere Kammern unterteilt. Alternativ kann der Gassack auch als ein einstückig gewobenes Bauteil ausgebildet sein, in dem mehrere Kammern, bevorzugt mit unterschiedlichen Volumina ausgebildet sind. Die Trennung der Kammern kann bis unmittelbar vor dem Gaseinlass fortgesetzt sein, also sich durch den Gasführungsabschnitt bis unmittelbar vor den Gasgenerator erstrecken.

Der Gasgenerator kann einen Deflektor aufweisen, der einen direkten Kontakt der erzeugten Gase innerhalb des Gasgenerators mit dem Gassackgewebe im Bereich des Gasgenerators verhindert. Dadurch wird die Haltbarkeit des Gassackes erhöht. Darüber hinaus leitet der Deflektor das vom Gasgenerator erzeugte, heiße Gas um und beschleunigt die Befüllung des Gassackes. Zur schnellen Befüllung des Gassackes ist es vorgesehen, dass Ausströmöffnungen am Gasgenerator oder Deflektor vorgesehen sind, die unmittelbar vor den Einlassöffnungen der Kammern des Gassackes liegen.

Um eine möglichst nach vom gerichtete Entfaltungsbewegung zu verwirklichen, ist der Gassack in Richtung auf den Sitzrahmen eingerollt oder gefaltet, so dass sich bei Vorliegen entsprechender Sensordaten aufgrund eines Unfalles oder eines bevorstehenden Unfalls der Gassack in Fahrtrichtung zwischen die Fahrzeugseitenstruktur und den Sitznutzer erstreckt.

Nachfolgend wird ein Ausführungsbeispiel der Erfindung anhand der beigefügten Figuren näher erläutert. Es zeigen:
- Figur 1 -: eine schematische Darstellung eines Fahrzeugsitzes in Frontalansicht;
- Figur 2 -: eine erste Variante eines Gassackes in einem entfalteten, demontierten Zustand;
- Figur 3 -: einen einteiligen Gassack; sowie
- Figur 4 -: eine Schnittdarstellung einer möglichen Anordnung des eingerollten Gassackes und eines Gasgenerators an einem Sitzrahmen.

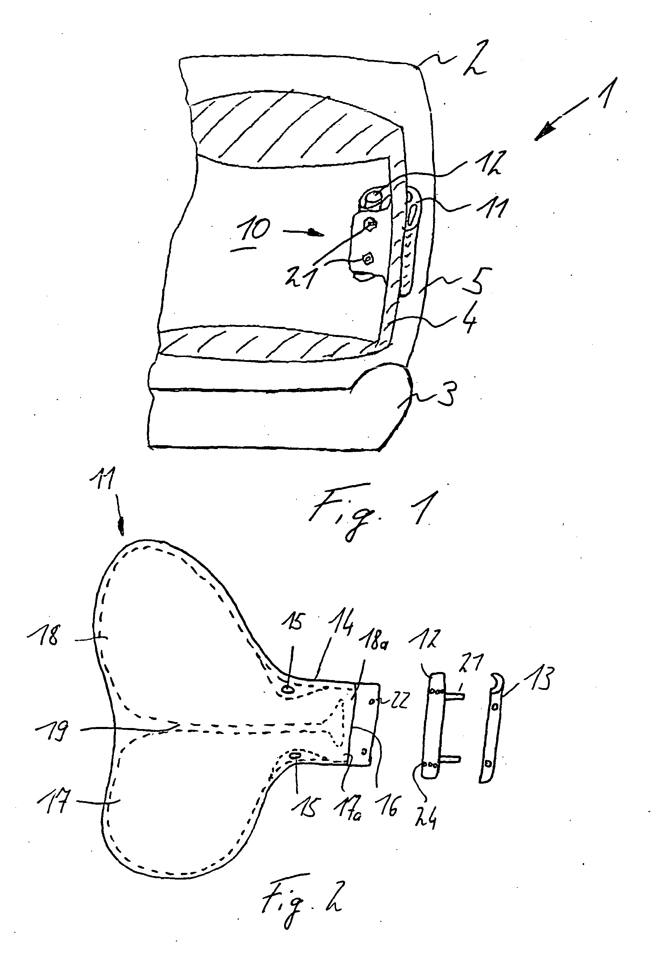

Figur 1 zeigt einen Teil eines Fahrzeugsitzes 1 mit einer Sitzlehne 2 und einem Sitzkissen 3 in schematischer Frontalansicht. Die Sitzlehne 2 weist einen Sitzrahmen 4 auf, der von einem Polster 5 überdeckt ist und den Sitzrahmen 4 vollständig umgibt. An dem Sitzrahmen 4 ist eine Airbageinheit 10 mit einem eingerollten Gassack 11 und einem Gasgenerator 12 befestigt. Der Gasgenerator 12 ist auf der Innenseite des Sitzrahmens 4 über Schraubbolzen 21 befestigt und legt dort gleichzeitig den Gassack 11 an der Innenseite des Sitzrahmens 4 fest. Mit Innenseite wird diejenige Seite des Sitzrahmens 4 bezeichnet, die dem Fahrzeugnutzer zugewandt ist, die Außenseite bezeichnet diejenige Seite des Sitzrahmens 4, die von dem Sitznutzer abgewandt liegt. Als Vorderseite des Sitzrahmens 4 wird diejenige Seite bezeichnet, die in die normale Fahrtrichtung zeigt, die Rückseite ist entsprechend entgegen der normalen Fahrrichtung ausgerichtet. Der Gassack 11 ist auf der Rückseite des Sitzrahmens 4 zur Außenseite geführt und wird dort an einer weiteren Befestigungsstelle festgelegt.

Die Airbageinheit 10 ist mit nicht dargestellten Sensoreinheiten, die bei Vorliegen von Beschleunigungsdaten, die einen Unfall vermuten lassen oder von Daten über einen sich schnell nähernden Gegenstand, die einen bevorstehenden Unfall vermuten lassen gekoppelt. Über einen pyrotechnischen Treibsatz wird in dem Gasgenerator 12 Gas erzeugt, das von dem Gasgenerator 12 in den zusammengefalteten oder eingerollten Airbag 11 eingeleitet wird. Dieser tritt aufgrund des sich vergrößernden Volumens aus dem Polster nach vorn aus und erstreckt sich zwischen die nicht dargestellte Fahrzeugseitenstruktur und dem ebenfalls nicht dargestellten Sitznutzer.

Im entfalteten Zustand kann der Gassack 11 aussehen, wie er in der Figur 2 dargestellt ist. Der Gassack 11 ist als ein Zweikammer-Thorax-Pelvis-Gassack ausgebildet, wobei die beiden Kammern 17, 18 durch eine Trennnaht 19 voneinander getrennt ausgebildet sind. Alternativ kann eine Stoffbahn in den Gassack 11 zur Bildung der beiden Kammern 17, 18 eingenäht sein. Statt der dargestellten Umfangsnaht 19, die zwei Gewebezuschnitte miteinander verbindet, kann lediglich eine Trennnaht in einem einstückig gewobenen Gassack 11 vorhanden sein. Ebenfalls ist es möglich, dass die Mehrkammerausgestaltung des Gassackes 11 aus einer entsprechenden Webart erzeugt wird.

Neben dem Gassack 11 sind der Gasgenerator 12 und ein demontierter Deflektor 13 dargestellt. An dem Gasgenerator 12 sind Befestigungsbolzen 21 sowie Auslassöffnungen 24 ausgebildet. Über die Befestigungsbolzen 21, die durch Aussparungen 22 in dem Gassack 11 hindurchgehen, wird der 11 Gassack an einer ersten Stelle an dem Sitzrahmen 4 formschlüssig festgelegt. In unmittelbarer Nähe der Aussparung 22 sind Gaseinlässe 17a, 18a, die den Auslassöffnungen 24 gegenüberliegen und das vom Gasgenerator 12 erzeugte Gas in die jeweiligen Kammern 17, 18 leiten. Das Gas wird dabei durch einen Gasführungsabschnitt 14, der einstückig an dem Gassack 11 ausgebildet ist oder daran angenäht sein kann, in die Kammern 17, 18 geleitet. Die Trennnaht 19 erstreckt sich bis unmittelbar vor die Gaseinlässe 17a, 18a. Der Deflektor 13 kann die hinteren Ausströmöffnungen 24 schließen oder das erzeugte Gas umleiten, so dass es ebenfalls in die Einlässe 17a, 18a hineinströmt. Zur Montage des Gassackes 11 wird ein Gewebestreifen, an dem die Ausnehmungen 22 angeordnet sind, auf die Befestigungsbolzen 22 aufgesteckt, auf die ebenfalls der Deflektor 13 aufsteckbar ist. Dann wird der Gewebestreifen um den Gasgenerator 12 herum gerollt, so dass der Gaseinlass 16 mit den Einlassöffnungen 17a, 18a in unmittelbarer Nähe zu den Ausströmöffnungen 24 oder Umleitkanälen des Deflektors 13 liegen.

Neben diesen ersten Befestigungsstellen 22 sind am Übergang des Gasführungsabschnittes 14 Befestigungslöcher 15 in dem Gassack 11 vorgesehen, die zur formschlüssigen Festlegung des Gassackes an einer zweiten Stelle an dem Sitzrahmen 4 dienen. Die Art und Weise der Befestigung wird weiter unten beschrieben werden.

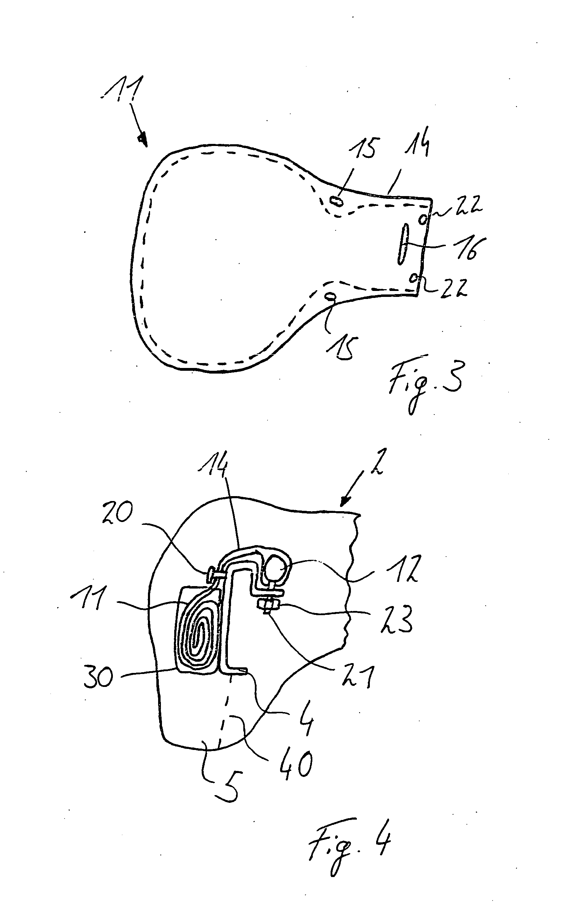

Eine alternative Ausgestaltung des Gassackes 11 ist in der Figur 3 dargestellt, in der ein Einkammergassack 11 dargestellt ist. Der Gaseinlass 16 ist in Gestalt eines Schlitzes zum Einführen des Gasgenerators ausgebildet. Die Befestigung erfolgt ebenfalls über die Löcher 22 an einer ersten Stelle mittels der Befestigungsbolzen 21 an dem nicht dargestellten Gasgenerator. Am Ende des Gasführungsabschnittes 14 sind zwei weitere Befestigungslöcher 15 vorgesehen, die zur weiteren Befestigung an dem Sitzrahmen 4 dienen.

In der Figur 4 ist in Schnittdarstellung in Draufsicht eine mögliche Anordnung des Gassackes 11 an dem Sitzrahmen 4 gezeigt. Der Gassack 11 befindet sich dabei in einem Gehäuse 30, das als ein Kunststoffgehäuse oder als ein deformierbares Soft-Cover ausgebildet sein kann. Der in dem Soft-Cover 30 eingerollte Gassack 11 ist außerhalb des Soft-Covers 30 über Befestigungsstifte 20, die die Befestigungsöffnungen 15 durchdringen, an dem Sitzrahmen 4 festgelegt. Alternativ kann eine Befestigung durch Schrauben, Nieten, Schnappverschlüsse, Clipse, Haken am Sitzrahmen 4 oder einen Klettverschluss erfolgen. Der Sitzrahmen 4 weist ein mehrfach gebogenes Profil auf. An der Rückseite des Profils ist der Gasgenerator 12 über die Befestigungsbolzen 21 mittels Muttern 23 an dem Sitzrahmen 4 befestigt. Der Gasgenerator 12 ist dabei auf der dem Sitznutzer abgewandten Seite der Sitzlehne 2 angeordnet. Der Gasführungsabschnitt 14 ist auf der Rückseite und auf der Außenseite des Sitzrahmens 4 geführt und an der Außenseite formschlüssig festgelegt. Die dargestellte Anordnung ist eine besonders günstige Ausnutzung der Raumverhältnisse innerhalb der Sitzlehne 2. Alternativ kann der Gasgenerator 12 auch innerhalb des Sitzrahmens 4 bzw. des Sitzrahmenprofils angeordnet sein. Der Gassack 11 ist innerhalb des Gehäuses 30 in Richtung auf den Sitzrahmen 4 eingerollt, vorliegend entgegen dem Uhrzeigersinn, um eine möglichst gestreckte Entfaltung nach vorn entlang einer in dem Polster 5 ausgebildeten Sollrisslinie 40 zu ermöglichen. Das Polster 5 umgibt den Airbag 11 und den Gasgenerator 12 vollständig.

Der Gasgenerator 12 ist über das Befestigungsmittel 20 direkt an der Außenseite am Sitzrahmen 4 befestigt und verbessert die Fixierung an dem Sitzrahmen 4. Der Gasgenerator kann an abweichenden Stellen, gegebenenfalls auch weit entfernt an dem Sitzrahmen 4 oder innerhalb des Fahrzeugsitzes 1, angeordnet sein. Alternative Führungen und Festlegungen des Airbags 11 und des Gasführungsabschnittes 14 an dem Sitzrahmen 4 sind ebenfalls möglich.

## Patentansprüche

1. Fahrzeugsitz mit einer Sitzfläche (3) und einer Sitzlehne (2), die einen von einem Polster (5) abgedeckten Sitzrahmen (4) aufweist, an dem eine Airbageinheit (10) mit einem einen Gaseinlass (16) aufweisenden, gefalteten oder gerollten Gassack (11) und ein Gasgenerator (12) an einer ersten Befestigungsstelle (22, 21) befestigt ist, der in strömungstechnischer Verbindung mit dem Gassack (11) steht, wobei der Gassack (11) außen an der dem Sitznutzer abgewandten Seite des Sitzrahmens (4) an einer zweiten Befestigungsstelle (15, 20) fixiert ist, **dadurch gekennzeichnet, dass** der Gasgenerator (12) an der Rückseite oder der Innenseite des Sitzrahmens (4) angeordnet und zwischen dem Gaseinlass (16) und dem gefalteten oder gerollten Gassack (11) ein Gasführungsabschnitt (14) ausgebildet ist, in dem Befestigungslöcher (15) der zweiten Befestigungsstelle (15, 20) vorgesehen sind.

2. Fahrzeugsitz nach Anspruch 1, **dadurch gekennzeichnet, dass** der Gassack (11) den Gaseinlass (16) im Bereich des Gasgenerators (12) aufweist und über Befestigungsbolzen (21) des Gasgenerators (12) an dem Sitzrahmen (4) festgelegt ist.

3. Fahrzeugsitz nach Anspruch 1 oder 2, **dadurch gekennzeichnet, dass** der Gasführungsabschnitt (14) auf der Außenseite des Sitzrahmens (4) formschlüssig fixiert ist.

4. Fahrzeugsitz nach einem der voranstehenden Ansprüche, **dadurch gekennzeichnet, dass** der eingerollte oder gefaltete Gassack (11) in einem Gehäuse (30), insbesondere einer weich verformbaren Umhüllung angeordnet ist.

5. Fahrzeugsitz nach Anspruch 4, **dadurch gekennzeichnet, dass** der Gasführungsabschnitt (14) nicht in dem Gehäuse (30) untergebracht ist.

6. Fahrzeugsitz nach einem der Ansprüche 3 bis 5, **dadurch gekennzeichnet, dass** an dem Übergang vom Gasführungsabschnitt (14) zum eingerollten oder gefalteten Gassack (11) Befestigungslöcher (15) ausgebildet sind, durch die der Gassack (11) unmittelbar an dem Sitzrahmen (4) fixiert ist.

7. Fahrzeugsitz nach einem der voranstehenden Ansprüche, **dadurch gekennzeichnet, dass** der Gasführungsabschnitt (14) von der Innenseite des Sitzrahmens (4) entlang der Vorderseite oder der Rückseite zur Außenseite geführt ist.

8. Fahrzeugsitz nach einem der voranstehenden Ansprüche, **dadurch gekennzeichnet, dass** der Gassack (11) als Mehrkammergassack ausgebildet ist.

9. Fahrzeugsitz nach Anspruch 8, **dadurch gekennzeichnet, dass** der Gassack (11) als Thorax-Pelvis-Gassack ausgebildet ist.

10. Fahrzeugsitz nach Anspruch 8 oder 9, **dadurch gekennzeichnet, dass** der Gassack (11) über eine Trennnaht (19) oder eine separate Stoffbahn in mehrere Kammern (17, 18) unterteilt ist.

11. Fahrzeugsitz nach Anspruch 10, **dadurch gekennzeichnet, dass** die Trennung der Kammern (17, 18) bis vor den Gaseinlass (16) fortgesetzt ist.

12. Fahrzeugsitz nach einem der voranstehenden Ansprüche, **dadurch gekennzeichnet, dass** der Gasgenerator (12) einen Deflektor (13) aufweist, der einen direkten Kontakt der erzeugten Gase mit dem Gassackgewebe am Gasgenerator (12) verhindert.

13. Fahrzeugsitz nach einem der Ansprüche 8 bis 12, **dadurch gekennzeichnet, dass** Ausströmöffnungen (24) am Gasgenerator (12) oder Deflektor vorgesehen sind, die vor den Einlassöffnungen (17a, 18a) der Kammern (17, 18) des Gassackes (11) liegen.

14. Fahrzeugsitz nach einem der voranstehenden Ansprüche, **dadurch gekennzeichnet, dass** der Gassack (11) in Richtung auf den Sitzrahmen (4) eingerollt oder gefaltet ist.

## Claims

1. Vehicle seat with a seat surface (3) and a seat back (2) which has a seat frame (4) which is covered by a cushion (5) and an which are fastened an airbag unit (10) having a folded or rolled gas sack (11) having a gas inlet (16), and a gas generator (12) at a first fastening point (22, 21), which gas generator is connected in terms of flow to the gas sack (11), the gas sack (11) being fixed an the outside at a second fastening point (15, 20) an that side of the seat frame (4) which faces away from the seat user, **characterized in that** the gas generator (12) is arranged an the rear side or the inside of the seat frame (4), and a gas-guiding section (14) is formed between the gas inlet (16) and the folded or rolled gas sack (11) in which fastening holes (15) of the second fastening point (15, 20) are provided.

2. Vehicle seat according to Claim 1, **characterized in that** the gas sack (11) has the gas inlet (16) in the region of the gas generator (12) and is secured an the seat frame (4) via fastening bolts (21) of the gas generator (12).

3. Vehicle seat according to Claim 1 or 2, **characterized in that** the gas-guiding section (14) is fixed in
an interlocking manner on the outside of the seat frame (4).

4. Vehicle seat according to one of the preceding claims, **characterized in that** the rolled-up or folded gas sack (11) is arranged in a housing (30), in particular in a pliably deformable casing.

5. Vehicle seat according to Claim 4, **characterized in that** the gas-guiding section (14) is not accommodated in the housing (30).

6. Vehicle seat according to one of Claims 3 to 5, **characterized in that** fastening holes (15) by means of which the gas sack (11) is fixed directly on the seat frame (4) are formed at the transition from the gas-guiding section (14) to the rolled-up or folded gas sack (11).

7. Vehicle seat according to one of the preceding claims, **characterized in that** the gas-guiding section (14) is guided from the inside of the seat frame (4) along the front side or the rear side to the outside.

8. Vehicle seat according to one of the preceding claims, **characterized in that** the gas sack (11) is designed as a multi-chamber gas sack.

9. Vehicle seat according to Claim 8, **characterized in that** the gas sack (11) is designed as a thorax and pelvis gas sack.

10. Vehicle seat according to Claim 8 or 9, **characterized in that** the gas sack (11) is divided into a plurality of chambers (17, 18) via a separating seam (19) or a separate length of material.

11. Vehicle seat according to Claim 10, **characterized in that** the separation of the chambers (17, 18) is continued up to the gas inlet (16).

12. Vehicle seat according to one of the preceding claims, **characterized in that** the gas generator (12) has a deflector (13) which prevents direct contact of the gases generated with the gas sack fabric at the gas generator (12).

13. Vehicle seat according to one of Claims 8 to 12, **characterized in that** discharge openings (24) are provided on the gas generator (12) or deflector and are situated in front of the inlet openings (17a, 18a) of the chambers (17, 18) of the gas sack (11).

14. Vehicle seat according to one of the preceding claims, **characterized in that** the gas sack (11) is rolled up or folded in the direction of the seat frame (4).

## Revendications

1. Siège de véhicule automobile comprenant une surface de siège (3) et un dossier de siège (2) qui présente, recouvert par un rembourrage (5), un châssis de siège (4) auquel est fixée en un premier emplacement de fixation (22, 21) une unité coussin gonflable (10) ayant un sac de gaz (11) replié ou enroulé présentant une admission de gaz (16), et un générateur de gaz (12) qui est relié au sac de gaz (11) par une technique de circulation de fluides, le sac de gaz (11) étant fixé en un deuxième emplacement de fixation (15, 20) à l'extérieur sur la face du châssis de siège (4) opposée à l'utilisateur du siège, **caractérisé en ce que** le générateur de gaz (12) est agencé du côté arrière ou du côté interne du châssis de siège (4), et il est formé entre l'admission de gaz (16) et le sac de gaz (11) enroulé ou replié un tronçon de guidage de gaz (4) dans lequel sont prévus des trous de fixation (15) du deuxième emplacement de fixation (15, 20).

2. Siège de véhicule automobile selon la revendication 1, **caractérisé en ce que** le sac de gaz (11) présente l'admission de gaz (16) dans la région du générateur de gaz (12) et est fixé au châssis de siège (4) par des boulons de fixation (21) du générateur de gaz (12).

3. Siège de véhicule automobile selon la revendication 1 ou 2, **caractérisé en ce que** le tronçon de guidage de gaz (14) est fixé à la face externe du châssis de siège (4) par conjugaison de forme.

4. Siège de véhicule automobile selon l'une des revendications précédentes, **caractérisé en ce que** le sac de gaz (11) enroulé ou replié est agencé dans un logement (30), en particulier une enveloppe souple déformable.

5. Siège de véhicule automobile selon la revendication 4, **caractérisé en ce que** le tronçon de guidage de gaz (14) n'est pas logé dans le logement (30).

6. Siège de véhicule automobile selon l'une des revendications 3 à 5, **caractérisé en ce que** des trous de fixation (15) grâce auxquels le sac de gaz (11) est directement fixé au châssis de siège (4) sont formés à la jonction du tronçon de guidage de gaz (14) vers le sac de gaz (11) enroulé ou replié.

7. Siège de véhicule automobile selon l'une des revendications précédentes, **caractérisé en ce que** le tronçon de guidage de gaz (14) va du côté interne du châssis de siège (4), le long du côté avant ou du côté arrière, jusqu'au côté externe.

8. Siège de véhicule automobile selon l'une des revendications précédentes, **caractérisé en ce que** le sac de gaz (11) est réalisé sous la forme d'un sac de gaz à plusieurs chambres.

9. Siège de véhicule automobile selon la revendication 8, **caractérisé en ce que** le sac de gaz (11) est réalisé sous la forme d'un sac de gaz thorax-pelvis.

10. Siège de véhicule automobile selon la revendication 8 ou 9, **caractérisé en ce que** le sac de gaz (11) est subdivisé en plusieurs chambres (17, 18) par une couture de séparation (19) ou par une bande de tissu séparé.

11. Siège de véhicule automobile selon la revendication 10, **caractérisé en ce que** la séparation des chambres (17, 18) se poursuit jusque devant l'admission de gaz (16).

12. Siège de véhicule automobile selon l'une des revendications précédentes, **caractérisé en ce que** le générateur de gaz (12) présente un déflecteur (13) qui empêche un contact direct des gaz produits avec le tissu du sac de gaz près du générateur de gaz (12).

13. Siège de véhicule automobile selon l'une des revendications 8 à 12, **caractérisé en ce que** des ouvertures de départ de gaz (24) sont prévues sur le générateur de gaz (12) ou le déflecteur, qui se trouvent devant les ouvertures d'admission (17a, 18a) des chambres (17, 18) du sac de gaz (11).

14. Siège de véhicule automobile selon l'une des revendications précédentes, **caractérisé en ce que** le sac de gaz (11) est enroulé ou replié dans la direction du châssis de siège (4).
